(19) Europäisches Patentamt / European Patent Office / Office européen des brevets

(11) **EP 3 072 110 B1**

(12) **FASCICULE DE BREVET EUROPEEN**

(45) Date de publication et mention de la délivrance du brevet:
**04.04.2018 Bulletin 2018/14**

(51) Int Cl.:
***G06T 7/20*** (2017.01)

(21) Numéro de dépôt: **14800057.3**

(22) Date de dépôt: **19.11.2014**

(86) Numéro de dépôt international:
**PCT/EP2014/075051**

(87) Numéro de publication internationale:
**WO 2015/075085 (28.05.2015 Gazette 2015/21)**

(54) **PROCÉDÉ D'ESTIMATION DU MOUVEMENT D'UN OBJET**

VERFAHREN ZUR SCHÄTZUNG DER BEWEGUNG EINES OBJEKTS

METHOD FOR ESTIMATING THE MOVEMENT OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2013 FR 1361347**

(43) Date de publication de la demande:
**28.09.2016 Bulletin 2016/39**

(73) Titulaires:
- **SYSNAV**
  **27200 Vernon (FR)**
- **Ecole Polytechnique**
  **91120 Palaiseau (FR)**

(72) Inventeurs:
- **VISSIERE, Nadège**
  **F-27200 Vernon (FR)**
- **ROUCHON, Pierre**
  **F-92190 Meudon (FR)**
- **HILLION, Mathieu**
  **F-27200 Vernon (FR)**
- **CARUSO, David**
  **F-78450 Villepreux (FR)**
- **BEAUCHARD-LEROY, Karine**
  **35170 Bruz (FR)**

(74) Mandataire: **Regimbeau et al**
**87 rue de Sèze**
**69477 Lyon Cedex 06 (FR)**

(56) Documents cités:
**EP-A1- 2 201 326    US-A1- 2013 094 705**

- **SANAE SHIMIZU ET AL: "Moving object detection by mobile Stereo Omni-directional System (SOS) using spherical depth image", PATTERN ANALYSIS AND APPLICATIONS, SPRINGER-VERLAG, LO, vol. 9, no. 2-3, 8 novembre 2005 (2005-11-08), pages 113-126, XP019431599, ISSN: 1433-755X**
- **NADEGE ZARROUATI ET AL: "Curvilinear velocity estimation using low-quality stereo-vision systems and a gyrometer", AMERICAN CONTROL CONFERENCE (ACC), 2012, IEEE, 27 juin 2012 (2012-06-27), pages 4108-4115, XP032244618, ISBN: 978-1-4577-1095-7**
- **ZHOU L ET AL: "TRACKING NONRIGID MOTION AND STRUCTURE FROM 2D SATELLITE CLOUD IMAGES WITHOUT CORRESPONDENCES", IEEE TRANSACTIONS ON PATTERN ANALYSIS AND MACHINE INTELLIGENCE, IEEE COMPUTER SOCIETY, USA, vol. 11, no. 23, 1 novembre 2001 (2001-11-01), pages 1330-1336, XP001141309, ISSN: 0162-8828, DOI: 10.1109/34.969121**
- **M. BERTALMIO ET AL: "Navier-stokes, fluid dynamics, and image and video inpainting", PROCEEDINGS OF THE 2001 IEEE COMPUTER SOCIETY CONFERENCE ON COMPUTER VISION AND PATTERN RECOGNITION. CVPR 2001, vol. 1, 1 janvier 2001 (2001-01-01), pages I-355, XP055144187, DOI: 10.1109/CVPR.2001.990497 ISBN: 978-0-76-951272-3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE GENERAL

La présente invention concerne le domaine de la navigation sans GPS.

Plus précisément, elle concerne un procédé d'estimation par reconnaissance optique du mouvement d'un objet.

ETAT DE L'ART

On connait des méthodes d'estimation par reconnaissance optique du mouvement à 6 degrés de liberté d'un objet évoluant dans un environnement statique. Par mouvement à 6 degrés de liberté, on entend la vitesse linéaire $v$ (un premier vecteur de dimension trois) et la vitesse angulaire $\omega$ de l'objet (un deuxième vecteur de dimension trois), dans un référentiel donné attaché à l'environnement.

Pour cela, on utilise l'acquisition d'images de profondeur par un capteur spécifique (souvent appelé « caméra 3D »). Une image de profondeur est une image dont la valeur des pixels est la distance entre le centre optique du capteur et le point observé (par opposition aux images classiques, type RGB, pour lesquelles la valeur d'un pixel définit sa couleur). Une image de profondeur est parfois représentée (afin d'être visuellement appréhendable), comme une image en niveaux de gris dont la luminance de chaque point est fonction de la valeur de distance (plus un point est près, plus il est clair).

A titre d'exemple, un capteur de type Kinect® est capable de faire l'acquisition simultanée d'une image de profondeur et d'une image RGB, chacune en 640×480 pixels.

Le capteur est soit fixe dans un référentiel donné et observe l'objet, soit attaché à l'objet et observe l'environnement considéré statique.

Pour calculer le mouvement à partir des images, une approche classique consiste à calculer explicitement un mouvement, connaissant un certain nombre de correspondances entre des points 3D mesurés dans chaque image. Cette méthode est rapide et explicite, ce qui implique qu'elle ne dépend pas d'une initialisation.

En revanche, elle requiert une étape de mise en correspondance: celle-ci est extrêmement délicate à partir d'images de profondeur, et nécessite donc en général de faire appel à des descripteurs de points robustes (type SURF ou SIFT) qui n'existent que pour des images RGB classiques, qu'il est donc nécessaire de traiter séparément, ce qui est lourd en termes de ressources informatiques.

Alternativement, certaines méthodes liées à l'algorithme dit « Iterative Closest Point » (ICP) ne nécessitent que des images de profondeur pour estimer une différence de pose. Cet algorithme cherche de manière itérative le mouvement qui permet au mieux de corréler entre eux deux ou plusieurs nuages de points. On s'affranchit de la nécessité de traiter des images RGB, mais cette méthode itérative est lente et reste coûteuse en temps de calcul. De plus la qualité du résultat dépend de manière très importante de l'initialisation. Un exemple pour l'estimation du mouvement d'un objet à partir des sous-parties des images de profondeur consécutives est décrit par SANAE SHIMIZU ET AL: "Moving object detection by mobile Stereo Omni-directional System (SOS) using spherical depth image",PATTERN ANALYSIS AND APPLICATIONS, SPRINGER-VERLAG, LO, vol. 9, no. 2-3, 8 novembre 2005 (2005-11-08), pages 113-126. Les méthodes connues sont donc insuffisantes pour un traitement fiable en temps réel. Il serait par conséquent souhaitable de disposer d'une nouvelle méthode optique d'estimation du mouvement d'un objet qui soit à la fois plus rapide, plus efficace, plus fiable, moins consommatrice en ressources informatiques, et qui ne nécessite que du matériel d'acquisition optique standard.

PRESENTATION DE L'INVENTION

La présente invention est définie par les revendications.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture de système pour la mise en oeuvre du procédé selon l'invention ;
- la figure 2a représente schématiquement l'environnement dans lequel est mis en oeuvre le procédé selon l'invention ;
- La figure 2b représente la manipulation d'une sous-partie d'une image acquise lors de la mise en oeuvre du procédé selon l'invention.

## DESCRIPTION DETAILLEE

*Architecture*

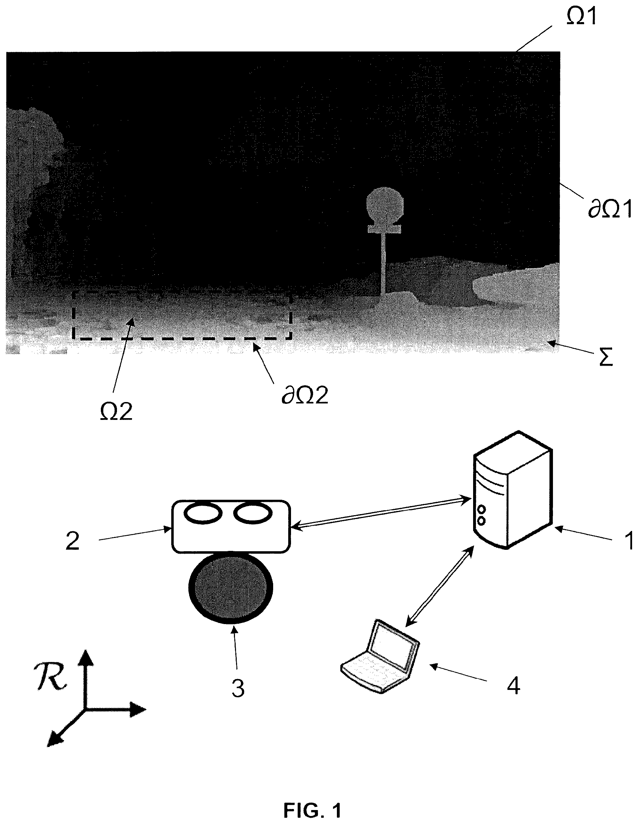

En référence à la **figure 1,** le présent procédé permet l'estimation du mouvement d'un objet 3 évoluant dans un environnement $\Sigma$. Cet objet 3 peut être n'importe quel objet mobile dont la connaissance de la position est souhaitée, par exemple un véhicule à roues, un drone, etc.

Le système pour la mise en oeuvre du procédé comprend au moins des moyens d'acquisition optique 2 et un équipement informatique 1. Dans un mode de réalisation principal de l'invention (qui sera pris à titre d'exemple dans la suite de la présente description), les moyens d'acquisition optique 2 sont solidaires de l'objet 3 (en d'autres termes ils ont le même mouvement) et observent l'environnement $\Sigma$. L'équipement 1 peut alors lui aussi être embarqué avec l'objet 3 (ce peut être n'importe quel équipement doté de capacités de traitement informatique, y compris par exemple un smartphone), ou à terre et relié aux moyens d'acquisition optique 2 par exemple via un réseau sans-fil (WiFi, etc.). Pour faciliter la compréhension du présent procédé, on réduira l'ensemble formé par l'objet 3 et les moyens d'acquisition optique 2 à un point, situé au niveau du centre optique des moyens d'acquisition optique 2. Il est à noter que les moyens d'acquisition optique 2 et/ou l'équipement 1 et/ou l'objet 3 peuvent être confondus (si par exemple l'objet 3 comporte déjà des moyens de traitement de données).

Dans le mode de réalisation alternatif (qui sera décrit plus spécifiquement plus loin), les moyens d'acquisition optique 2 sont fixes par rapport à l'environnement $\Sigma$ et observent l'objet 3. On comprendra que le premier mode de réalisation (moyens d'acquisition optique 2 embarqués) est préféré, car il permet l'estimation continue du mouvement de l'objet 3, y compris s'il se déplace sur de longues distances. Dans le second mode, on est limité au champ de vision des moyens d'acquisition optique 2.

L'équipement 1 comprend des moyens de traitement de données 11 (par exemple un processeur), et avantageusement des moyens de stockage de données 12 (par exemple un disque dur), lesquelles peuvent être utiles pour stocker les données de mouvement obtenues à chaque mise en oeuvre du procédé (par exemple pour avoir des logs de données de navigation).

Les moyens d'acquisition optique 2 sont capables d'acquérir des images de profondeur (qui comme expliqué sont des images dont la valeur des pixels est la distance entre le centre optique et le point observé). On connait de nombreuses technologies permettant ceci, et les moyens d'acquisition optique 2 peuvent par exemple utiliser la triangulation stéréo (deux caméras côte à côte), la lumière structurée (projection sur la scène d'un motif prédéterminé), l'interférométrie, etc.

Le présent procédé n'est limité à aucun type en particulier de moyens d'acquisition optique 2, il suffit qu'ils permettent l'obtention d'images de profondeur. En référence à la figure 1, une image de profondeur est représentée (pour faciliter la compréhension) comme une image en niveaux de gris.

Un équipement auxiliaire 4 (par exemple un terminal mobile) connecté à l'équipement 1 peut éventuellement être utilisé pour récupérer les données de mouvement qui vont être obtenues par le présent procédé, et par exemple mettre en oeuvre un programme de navigation (affichage sur une carte de la position de l'objet 3 en fonction de son mouvement).

Au moins une composante du mouvement est estimée par le procédé. Par composante du mouvement, on entend comme expliqué toute composante d'une vitesse linéaire v de l'objet 3, ou d'une vitesse angulaire $\omega$ de l'objet 3, mais également une combinaison linéaire de deux ou plus des composantes de base précédemment citées.

*Principe et notations*

Le présent procédé traite des flux vidéo d'images de profondeur, qui sont supposées représenter l'environnement perçu par la caméra 3D de manière dense et continue. En pratique, les images sont acquises à une fréquence finie donnée, et sont formées d'une matrice de pixels régulièrement espacés. On passera donc d'une formulation mathématique traitant des variations temporelles et des gradients spatiaux à une implémentation pratique où les dérivées sont approximées grâce à des méthode et schémas numériques bien connues de l'homme du métier. En particulier, la différence de deux images de profondeur consécutives est une représentation non limitative de la variation temporelle de la profondeur.

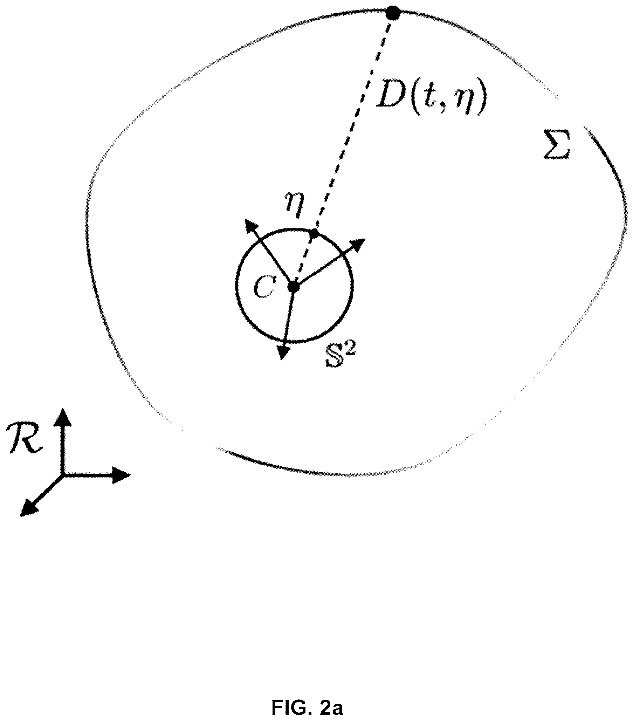

Le principe du présent procédé est en effet l'exploitation des variations temporelles du champ de profondeur en tant que fonction de la direction d'observation. En effet, en référence à la **figure 2a,** à chaque pixel correspond une direction d'observation spécifique, c'est-à-dire un vecteur unitaire qu'on appelle $\eta$. Le vecteur $\eta$ est donc un élément de la sphère unité de $R^3$ centrée autour de l'objet C (ou plutôt le centre optique des moyens d'acquisition optique 2 qui y sont fixés comme expliqué), qu'on note $S^2$.

Sans prendre en compte la limitation du champ de vision d'une caméra, à un temps t, une position et une orientation donnés dans un environnement fixe $\Sigma$ correspond une fonction de profondeur $D(t, \eta)$. D est donc une fonction du temps (élément de R) et de l'espace (S$^2$) dans R. Si la caméra bouge, la direction d'observation $\eta$ d'un point « physique » particulier évolue au cours du temps, et la profondeur $D(t,\eta)$ associée à ce point particulier évolue en fonction du déplacement en position de la caméra (mais pas du déplacement en orientation). Si au contraire, on ne fixe pas un point, mais une direction $\eta$ donnée, les variations temporelles ($\partial_t D$, la dérivée par rapport au temps d'une fonction du temps et de l'espace) évoluent en fonction de la forme géométrique de l'environnement $\Sigma$, des variations spatiales $\nabla D$ de cette forme et du mouvement à 6 degrés de liberté de l'objet :

$$\partial_t D = -\nabla D \cdot \left(\eta \times \left(\omega + \frac{1}{D}\eta \times v\right)\right) - v \cdot \eta \tag{1}$$

L'opérateur gradient, et les calculs différentiels qui suivent, sont adaptés à la surface de la sphère unité en tant que variété Riemanienne. Une variété Riemanienne est localement identifiable à l'espace Euclidien et permet d'exprimer de façon simple des calculs différentiels sur des surfaces complexes.

Le fait de considérer les variations temporelles d'un champ scalaire dans une direction donnée est usuel en traitement d'image : pour une image RGB classique, on parle de flot optique. Voir par exemple "Fusion of inertial and visual : a geometrical observer-based approach", S. Bonnabel and P. Rouchon, 2nd Mediterranean Conference on Intelligent Systems and Automation (CISA'09), 1107:54-58, 2009.

On rappelle 2 formules de calcul différentiel sur S$^2$, valables pour $\eta \in$ S$^2$ et $P \in$ R$^3$ indépendant de $\eta$ :

$$\nabla \cdot (\eta \times P) = 0 \tag{2}$$

$$\nabla \cdot \left(\eta \times (\eta \times P)\right) = -2\eta \cdot P \tag{3}$$

où $\nabla \cdot$ désigne l'opérateur divergence par rapport à $\eta$ sur S$^2$ en tant que variété Riemanienne.

On peut à partir de (1) exprimer la dérivée temporelle de $D^3$ (en d'autres termes le cube de la profondeur) :

$$\partial_t D^3 = -\nabla D^3 \cdot (\eta \times \omega) - \frac{3}{2}\nabla D^2 \cdot \left(\eta \times (\eta \times v)\right) - 3D^2\, v \cdot \eta$$

Puis, en utilisant (2) :

$$\nabla \cdot (D^3\eta \times \omega) = \nabla D^3 \cdot (\eta \times \omega) + D^3\nabla \cdot (\eta \times \omega) = \nabla D^3 \cdot (\eta \times \omega)$$

et en utilisant (3) :

$$\nabla \cdot \left(D^2\eta \times (\eta \times v)\right) = \nabla D^2 \cdot \left(\eta \times (\eta \times v)\right) + D^2\, \nabla \cdot \left(\eta \times (\eta \times v)\right) = \nabla D^2 \cdot$$
$$\left(\eta \times (\eta \times v)\right) - 2D^2\, v \cdot \eta,$$

donc

$$\nabla D^2 \cdot \left(\eta \times (\eta \times v)\right) = \nabla \cdot \left(D^2\eta \times (\eta \times v)\right) + 2D^2\, v \cdot \eta$$

On reformule donc

$$\partial_t D^3 = -\nabla \cdot (D^3\eta \times \omega) - \frac{3}{2}\nabla \cdot \left(D^2\eta \times (\eta \times v)\right)$$

La dérivée temporelle de $D^3$ s'exprime donc totalement comme la divergence d'un champ de vecteurs.

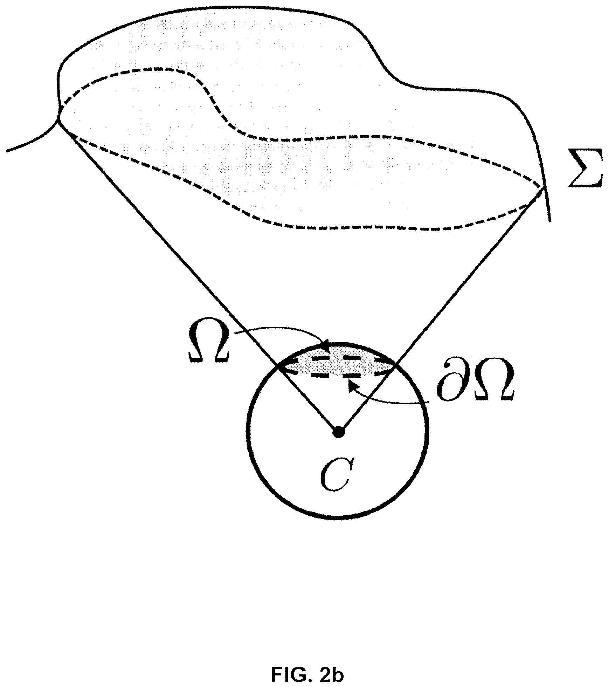

En intégrant cette équation sur une portion $\Omega$ fixe de S$^2$ délimitée par un contour $\partial\Omega$ (voir **figure 2b,** et voir plus loin pour davantage d'explications), le théorème de Stokes donne immédiatement :

$$\partial_t \int_\Omega D^3 d\sigma_\eta = - \oint_{\partial\Omega} ((D^3\eta \times \omega) \cdot n)dl_\eta - \frac{3}{2}\oint_{\partial\Omega}((D^2\eta \times (\eta \times v)) \cdot n)dl_\eta$$

où $d\sigma_\eta$ est un élément de surface infinitésimal de $S^2$, $dl_\eta$ est un élément de longueur infinitésimal et $n$ est la normale sortante au contour $\partial\Omega$. La direction de n dépend bien sûr de la forme du contour $\partial\Omega$ envisagé, et donc de $\eta$.

On réarrange cette équation en utilisant les propriétés du produit mixte:

$$\partial_t \int_\Omega D^3 d\sigma_\eta = \left(\oint_{\partial\Omega} (D^3\eta \times n)dl_\eta\right) \cdot \omega + \left(\frac{3}{2}\oint_{\partial\Omega}(D^2\eta \times (n \times \eta))dl_\eta\right) \cdot v$$

Notons que $n$ étant la normale sortante au contour $\partial\Omega$, c'est un vecteur tangent à $S^2$, ce qui implique $\eta \times (n \times \eta) = n$. Finalement,

$$\partial_t \int_\Omega D^3 d\sigma_\eta = \left(\oint_{\partial\Omega} (D^3\eta \times n)dl_\eta\right) \cdot \omega + \left(\frac{3}{2}\oint_{\partial\Omega}(D^2n)dl_\eta\right) \cdot v$$

Formellement, on peut ainsi former des équations linéaires en v et $\omega$ en considérant différentes portions $\Omega_i$ de $S^2$ et leurs contours $\partial\Omega_i$ associés. En posant $\alpha_i = \oint_{\partial\Omega_i}(D^3\eta \times n)dl_\eta$, $\beta_i = \frac{3}{2}\oint_{\partial\Omega_i}(D^2n)dl_\eta$ et $\gamma_i = \partial_t \int_{\Omega_i}D^3d\sigma_\eta$, on obtient un système linéaire d'équations scalaires de la forme

$$\{\gamma_i = \alpha_i \cdot \omega + \beta_i \cdot v\}_{1 \leq i \leq N}$$

Si l'on peut en former 6 qui soient linéairement indépendantes, il suffit d'inverser le système linéaire formé pour reconstituer le déplacement en translation et en rotation associé au mouvement.

*Implémentation*

L'approche proposée en pratique commence par une étape (a) d'acquisition par les moyens d'acquisition optique d'au moins deux images de profondeur consécutives de l'environnement $\Sigma$. Les deux images sont alors transmises aux moyens de traitement de données 11 de l'équipement 1. Ces deux images sont typiquement prises à une fraction de seconde d'écart, avantageusement moins de 40 ms. Il suffit que la fréquence soit suffisante pour que l'approximation X($t + dt$) - X($t$) $\approx vdt$ soit valide.

Comme on le verra, la présente méthode est extrêmement rapide : quelques millisecondes de traitement sur un ordinateur standard suffisent pour calculer un déplacement entre deux images de profondeur consécutives. A condition que le temps d'écart entre l'acquisition de deux images consécutives soit supérieur à ce temps de traitement, un traitement en temps réel est possible. Des moyens d'acquisition optiques capables d'acquérir 25 images par secondes sont particulièrement adaptés.

Dans un tel traitement en temps réel, le mouvement est estimé à partir de chaque couple *k,k+1* d'images :

- une première image puis une deuxième image sont acquises
- le procédé est mis en oeuvre en utilisant ces première et deuxième images ;
- une troisième image est acquise,
- le procédé est mis en oeuvre en utilisant la deuxième image et la troisième image,
- une quatrième image est acquise,
- etc.

*Contours*

Comme expliqué, le présent procédé utilise différentes portions $\Omega_i$ de $S^2$ et leurs contours $\partial\Omega_i$ associés. Ces portions, dont un exemple est représenté par la figure 2b, définissent des sous-parties (fermées) d'une image de profondeur. Dans la suite de la présente description, on confondra les portions et les sous-parties associées des images. La figure 1 représente par exemple deux sous-parties $\Omega_1$ et $\Omega_2$ de $S^2$ et leurs contours $\partial\Omega_1$ et $\partial\Omega_2$.

Ces sous-parties peuvent présenter n'importe quelle forme, mais avantageusement, le plus simple et le plus adapté à des images issues de capteurs CCD ou CMOS (qui sont de structure matricielle) est de choisir des rectangles.

Au moins une sous-partie $\Omega_i$ des deux images de profondeur (par une sous-partie $\Omega_i$ de « deux » images, on entend qu'il s'agit de la même zone (dans le référentiel du capteur) isolée sur les deux images, indépendamment du mouvement de l'environnement $\Sigma$ observé par rapport à l'objet 3. En d'autres termes la même sous-partie $\Omega_i$ appliquée aux deux images représente des parties différentes de l'environnement $\Sigma$) est sélectionnée par les moyens de traitement de données 11 dans une étape (b). Une sous-partie $\Omega_i$ permet d'estimer une composante du mouvement, c'est pourquoi six sous-parties $\Omega_i$ des deux images de profondeur permettant de former une matrice inversible A=$(\alpha_i^T, \beta_i^T)_{1 \le i \le N}$ (voir plus loin) sont avantageusement sélectionnées à l'étape (b), de façon à pouvoir estimer les trois composantes de vitesse linéaire v de l'objet 3 et les trois composantes de vitesse angulaire $\omega$ de l'objet 3 (comme expliqué avant), ou du moins six combinaison linéaires indépendantes des vitesses linéaire v et/ou angulaire $\omega$.

Le présent procédé n'est limité à aucune règle pour sélectionner ces sous-parties $\Omega_i$, par exemple des rectangles pourront être sélectionnés aléatoirement. En outre, chaque sous-partie $\Omega_i$ est avantageusement sélectionnée à l'étape (b) de telle sorte que la profondeur $D$ associée aux pixels de la sous-partie $\Omega_i$ est sensiblement continue sur la sous-partie $\Omega_i$. En d'autres termes, on évite des sous-parties $\Omega_i$ qui présentent des discontinuités majeures (par exemple une sous-partie de l'image exemple de la figure 1 qui comprendrait le panneau de signalisation en bas à droite présenterait de fortes discontinuités de profondeur sur le pourtour de ce panneau). De telles discontinuités peuvent perturber l'estimation du mouvement.

L'étape (b) comprend ainsi préférentiellement la pré-sélection de sous-parties potentielles (par exemple aléatoirement, ou à partir d'une ensemble de sous-parties possibles prédéterminé), puis un test de continuité. Chaque sous-partie « trop discontinue » est écartée, les sous-parties $\Omega_i$ sélectionnées étant celles qui passent ce test. On répète le processus jusqu'à obtenir le nombre de sous-parties $\Omega_i$ souhaité.

Dans la mesure où les images sont composées de pixels, cette discontinuité peut être établie si la différence de profondeur associée à deux pixels voisins est supérieure à un seuil prédéterminé. Plus ce seuil est faible, plus l'estimation sera fiable, mais plus la sélection de sous-parties $\Omega_i$ est difficile.

Le présent procédé n'est limité à aucun algorithme pour déterminer si une sous-partie $\Omega_i$ est continue ou non. Par exemple, peut être mise en oeuvre une estimation par différences finies de la discontinuité de $D$ le long du contour $\partial\Omega_i$ de la sous-partie $\Omega_i$.

*Les trois paramètres*

Dans une étape (c), pour chaque sous-partie $\Omega_i$ sélectionnée des deux images de profondeur, les moyens de traitement de données 11 calculent en fonction des valeurs de profondeur des pixels dans la sous-partie $\Omega_i$ (en d'autres termes les valeurs de $D$) les trois paramètres $\alpha_i$, $\beta_i$, $\gamma_i$ associés à la sous-partie $\Omega_i$.

Le premier paramètre $\gamma_i$ est représentatif d'une différence entre les deux images de profondeur d'un volume associé à un angle solide défini par un contour $\partial\Omega_i$ de la sous-partie $\Omega_i$. En effet, comme expliqué ce premier paramètre traduit la valeur de $\partial_t \int_{\Omega_i} D^3 d\sigma_\eta$. Dans la mesure où l'écart de temps entre les deux images est très faible, le $\partial_t$ est approximé par la différence sur le pas de temps, en d'autres termes la différence entre les deux images consécutives.

Ainsi, les moyens de traitement de données calculent sur la sous-partie la formule $\int_{\Omega_i} D^3 d\sigma_\eta$ appliqué à la première image de profondeur, puis la formule $\int_{\Omega_i} D^3 d\sigma_\eta$ appliquée à la deuxième image de profondeur, et les soustraient. Comme expliqué $d\sigma_\eta$ est un élément de surface élémentaire (par définition infinitésimal) de $S^2$, en d'autres termes un pixel de la sous-partie $\Omega_i$ de l'image.

En pratique, le calcul de $\int_{\Omega_i} D^3 d\sigma_\eta$ consiste en la somme des profondeurs au cube des pixels de la sous-partie $\Omega_i$. A cause du cube, la valeur obtenue est représentative du volume du cône représenté par la figure 2b, c'est-à-dire le volume associé à un angle solide défini par un contour $\partial\Omega_i$ de la sous-partie $\Omega_i$.

Le deuxième paramètre $\alpha_i$ est représentatif d'une quantité vectorielle volumique le long dudit contour $\partial\Omega_i$. En effet, comme expliqué ce paramètre traduit la valeur vectorielle de $\oint_{\partial\Omega_i} (D^3\eta \times n) dl_\eta$ appliquée à au moins une des deux images de profondeur (on comprendra que cette formulation inclut également toute combinaison des deux images dépendant du schéma numérique choisi, telle qu'une moyenne, éventuellement pondérée), où pour un pixel du contour $\partial\Omega_i$ d'une sous-partie $\Omega_i$ d'une image de profondeur, $\eta$ est le vecteur unitaire représentant la direction d'observation associée au pixel, et $n$ le vecteur unitaire normal au contour $\partial\Omega_i$ en ledit pixel. Comme expliqué, $dl_n$ est un élément de longueur élémentaire (par définition infinitésimal), en d'autres termes la longueur ou la largeur d'un pixel du contour $\partial\Omega_i$ de la sous-partie $\Omega_i$ de l'image.

On comprendra que l'implémentation de cette méthode à un modèle de caméra donné nécessite éventuellement préalablement la calibration intrinsèque de la caméra, c'est-à-dire l'estimation des paramètres intrinsèques (résolution, focale, position du point principal dans l'image, distorsion...) qui permettront d'exprimer le vecteur unitaire $\eta$ en fonction de la position d'un pixel dans l'image, ainsi que l'expression analytique de la normale $n$ le long du contour et des éléments infinitésimaux $dl_\eta$ et $d\sigma_\eta$ en fonction du contour choisi et de $\eta$, puis des coordonnées d'un pixel dans l'image.

Par définition du produit vectoriel, en tout point du contour $\partial\Omega_i$, $(D^3\eta \times n)$ est orthogonal à $\eta$ et $n$, en d'autres termes tangent au contour $\partial\Omega_i$.

En pratique, le calcul de $\oint_{\partial\Omega_i}(D^3\eta \times n)dl_\eta$ consiste en la somme des vecteurs unitaires tangents au contour $\partial\Omega_i$ en chacun des pixels du contour $\partial\Omega_i$, pondérés par la profondeur au cube des pixels (d'où quantité vectorielle « volumique »), en fonction de l'expression des vecteurs $\eta$ et $n$ (avantageusement précalculée). Si le contour $\partial\Omega_i$ est rectangulaire, il s'agit d'une somme de quatre vecteurs (un par coté).

Le troisième paramètre $\beta_i$ est représentatif d'une quantité vectorielle surfacique sortant dudit contour $\partial\Omega_i$. En effet, comme expliqué ce paramètre traduit la valeur vectorielle de $\frac{3}{2}\oint_{\partial\Omega_i}(D^2n)dl_\eta$ appliquée au moins à une des deux images de profondeur (on comprendra à nouveau que cette formulation inclut également toute combinaison des deux images dépendant du schéma numérique choisi, telle qu'une moyenne, éventuellement pondérée), où pour un pixel du contour $\partial\Omega_i$ d'une sous-partie $\Omega_i$ d'une image de profondeur, $n$ est toujours le vecteur unitaire normal au contour $\partial\Omega_i$ en ledit pixel.

En tout point du contour $\partial\Omega_i$, $(D^2n)$ est colinéaire à $n$, en d'autres termes normal au contour $\partial\Omega_i$.

En pratique, le calcul de $\frac{3}{2}\oint_{\partial\Omega_i}(D^2n)dl_\eta$ consiste en la somme des vecteurs unitaires normaux au contour $\partial\Omega_i$ en chacun des pixels du contour $\partial\Omega_i$, pondérés par 3/2 et la profondeur au carré des pixels (d'où la quantité vectorielle surfacique), en fonction de l'expression des vecteurs $\eta$ et $n$ (avantageusement précalculée). Si le contour $\partial\Omega_i$ est rectangulaire, il s'agit d'une somme de quatre vecteurs (un par côté).

*Estimation du mouvement*

Dans une étape (d), les moyens de traitement de données 11 estiment la ou les composantes recherchées du mouvement dudit objet 3 en fonction des premier, deuxième et troisième paramètres $\alpha_i$, $\beta_i$, $\gamma_i$ associés à chaque sous-partie $\Omega_i$.

Dans un mode de réalisation préféré dans lequel 6 sous-parties indépendantes ont été sélectionnées et dans lequel les 6 composantes du mouvement sont recherchées, l'étape (d) comprend avantageusement une étape préalable (d0) de formation par les moyens de traitement de données 11 d'une matrice *A* comprenant N colonnes et une ligne pour chaque sous-partie $\Omega_{i,1\leq i\leq N}$, et un vecteur *B* comprenant une ligne pour chaque sous-partie $\Omega_{i,1\leq i\leq N}$, tels que A=$(\alpha_i^T, \beta_i^T)_{1\leq i\leq N}$ et B=$(\gamma_i)_{1\leq i\leq N}$.

Il suffit de résoudre le système linéaire pour déterminer les composantes du mouvement : l'étape (d) comprend alors la détermination d'un vecteur X=$(\omega^T, v^T)^T$ tel que AX=B par toute méthode connue de l'homme du métier.

*Cas d'une caméra fixe*

Selon un mode de réalisation alternatif évoqué précédemment, les moyens d'acquisition 2 sont solidaires de l'environnement $\Sigma$ et non de l'objet 3. Dans ce mode de réalisation, l'étape (a) consiste en l'acquisition par des moyens d'acquisition optique 2 solidaires de l'environnement $\Sigma$ d'au moins deux images de profondeur consécutives de l'objet 3.

Les autres étapes (b) à (d) sont identiques, à la précision près que les sous-parties $\Omega_i$ sélectionnées à l'étape (b) doivent, dans l'hypothèse où les images de profondeur acquises représentent plus que l'objet 3 (et donc une partie de l'environnement $\Sigma$ en arrière-plan), être situées uniquement sur l'objet 3.

*Système*

Selon un troisième aspect, l'invention concerne en particulier le système pour la mise en oeuvre de l'un ou l'autre des modes de réalisation du procédé.

Comme expliqué précédemment, le système comprend les moyens d'acquisition optique 2 (capables d'acquérir des images de profondeur) et un équipement 1 comprenant des moyens de traitement de données 11.

Les moyens d'acquisition optique 2 sont configurés pour la mise en oeuvre de l'étape (a), et moyens de traitement de données 11 sont configurés pour la mise en oeuvre des étapes (b) à (d).

*Produit programme d'ordinateur*

Selon un quatrième et un cinquième aspects, l'invention concerne un produit programme d'ordinateur comprenant des instructions de code pour l'exécution (sur les moyens de traitement en particulier de l'équipement 1) d'un procédé d'estimation du mouvement d'un objet 3 évoluant dans un environnement $\Sigma$ selon le premier ou le deuxième aspect de l'invention, ainsi que des moyens de stockage lisibles par un équipement informatique (par exemple un disque dur de l'équipement 1) sur lequel on trouve ce produit programme d'ordinateur.

**Revendications**

1. Procédé d'estimation du mouvement d'un objet (3) évoluant dans un environnement ($\Sigma$), le procédé étant **caractérisé en ce qu'**il comprend des étapes de :

   (a) Acquisition par des moyens d'acquisition optique (2) solidaires de l'objet (3) d'au moins deux images de profondeur consécutives de l'environnement ($\Sigma$) ;
   (b) Sélection par des moyens de traitement de données (11) d'un équipement (1) d'au moins une sous-partie ($\Omega_i$) des deux images de profondeur,
   (c) Pour chaque sous-partie ($\Omega_i$) sélectionnée des deux images de profondeur, calcul par les moyens de traitement de données (11) en fonction des valeurs de profondeur des pixels dans la sous-partie ($\Omega_i$) de :

   ○ un premier paramètre ($\gamma_i$) représentatif d'une différence entre les deux images de profondeur d'un volume associé à un angle solide défini par un contour ($\partial\Omega_i$) de la sous-partie ($\Omega_i$) ;
   ○ un deuxième paramètre ($\alpha_i$) donné par la formule $\oint_{\Omega_i}(D^3\eta \times n)dl_\eta$ appliquée à au moins une des deux images de profondeur ;

   ○ un troisième paramètre ($\beta_i$) donné par la formule $\frac{3}{2}\oint_{\partial\Omega_i}(D^2 n)dl_\eta$ appliquée à au moins une des deux images de profondeur,

   où pour un pixel du contour ($\partial\Omega_i$) d'une sous-partie ($\Omega_i$) d'une image de profondeur, $D$ est la profondeur associée au pixel, $\eta$ est le vecteur unitaire représentant la direction d'observation associée au pixel, $n$ est le vecteur unitaire normal au contour ($\partial\Omega_i$) en ledit pixel, et $dl_\eta$ est un élément de longueur élémentaire du contour ($\partial\Omega_i$) de la sous-partie ($\Omega_i$) ;
   (d) Estimation par les moyens de traitement de données (11) d'au moins une composante du mouvement dudit objet (3) en fonction des premier, deuxième et troisième paramètres ($\alpha_i$, $\beta_i$, $\gamma_i$) associés à chaque sous-partie ($\Omega_i$).

2. Procédé d'estimation du mouvement d'un objet (3) évoluant dans un environnement ($\Sigma$), le procédé étant **caractérisé en ce qu'**il comprend des étapes de :

   (a) Acquisition par des moyens d'acquisition optique (2) solidaires de l'environnement ($\Sigma$) d'au moins deux images de profondeur consécutives de l'objet (3) ;
   (b) Sélection par des moyens de traitement de données (11) d'un équipement (1) d'au moins une sous-partie ($\Omega_i$) des deux images de profondeur, chaque sous-partie de deux images située uniquement sur l'objet (3),
   (c) Pour chaque sous-partie ($\Omega_i$) sélectionnée des deux images de profondeur, calcul par les moyens de traitement de données (11) en fonction des valeurs de profondeur des pixels dans la sous-partie ($\Omega_i$) de :

   ○ un premier paramètre ($\gamma_i$) représentatif d'une différence entre les deux images de profondeur d'un volume associé à un angle solide défini par un contour ($\partial\Omega_i$) de la sous-partie ($\Omega_i$) ;
   ○ un deuxième paramètre ($\alpha_i$) donné par la formule $\oint_{\partial\Omega_i}(D^3\eta \times n)dl_\eta$ appliquée à au moins une des deux images de profondeur ;

   ○ un troisième paramètre ($\beta_i$) donné par la formule $\frac{3}{2}\oint_{\partial\Omega_i}(D^2 n)dl_\eta$ appliquée à au moins une des deux images de profondeur,

   où pour un pixel du contour ($\partial\Omega_i$) d'une sous-partie ($\Omega_i$) d'une image de profondeur, $D$ est la profondeur associée au pixel, $\eta$ est le vecteur unitaire représentant la direction d'observation associée au pixel, $n$ est le vecteur unitaire normal au contour ($\partial\Omega_i$) en ledit pixel, et $dl_\eta$ est un élément de longueur élémentaire du contour ($\partial\Omega_i$) de la sous-partie ($\Omega_i$) ;
   (d) Estimation par les moyens de traitement de données (11) d'au moins une composante du mouvement dudit objet (3) en fonction des premier, deuxième et troisième paramètres ($\alpha_i$, $\beta_i$, $\gamma_i$) associés à chaque sous-partie ($\Omega_i$).

3. Procédé selon l'une des revendications précédentes, dans lequel l'au moins une composante estimée du mouvement dudit objet (3) est sélectionnée parmi trois composantes d'une vitesse linéaire (v) de l'objet (3), trois composantes d'une vitesse angulaire ($\omega$) de l'objet (3), et une combinaison linéaire d'une pluralité desdites composantes d'une vitesse linéaire ou angulaire (v, $\omega$) de l'objet (3).

4. Procédé selon la revendication 3, dans lequel au moins six sous-parties ($\Omega_i$) indépendantes des deux images de profondeur sont sélectionnées à l'étape (b), l'étape (d) comprenant l'estimation des trois composantes d'une vitesse linéaire (v) de l'objet (3) et des trois composantes d'une vitesse angulaire ($\omega$) de l'objet (3).

5. Procédé selon l'une des revendications 3 et 4, dans lequel l'étape (d) comprend une étape préalable (d0) de formation par les moyens de traitement de données (11) d'une matrice $A$ comprenant $N$ colonnes et une ligne pour chaque sous-partie ($\Omega_{i,1\leq i\leq N}$), et un vecteur $B$ comprenant une ligne pour chaque sous-partie ($\Omega_{i,1\leq i\leq N}$), tels que A=($\alpha_i^T$, $\beta_i^T$)$_{1\leq i\leq N}$ et B=($\gamma_i$)$_{1\leq i\leq N}$, l'étape (d) comprenant la détermination d'un vecteur X=($\omega^T$, $v^T$)$^T$, tel que AX=B.

6. Procédé selon l'une des revendications précédentes, dans lequel le premier paramètre ($\gamma_i$) est donné par la différence des formules $\int_{\Omega_i}D^3d\sigma_\eta$ appliquées à chacune des images de profondeur, où pour un pixel d'une sous-partie ($\Omega_i$) d'une image de profondeur, $D$ est la profondeur associée au pixel et $d\sigma_\eta$ est un élément de surface élémentaire de la sous-partie ($\Omega_i$).

7. Procédé selon l'une des revendications précédentes, dans lequel chaque sous-partie ($\Omega_i$) sélectionnée à l'étape (b) est rectangulaire.

8. Procédé selon l'une des revendications précédentes, dans lequel toutes les sous-parties ($\Omega_i$) sélectionnées à l'étape (b) sont distinctes.

9. Procédé selon l'une des revendications précédentes, dans lequel chaque sous-partie ($\Omega_i$) est sélectionnée à l'étape (b) de telle sorte que la profondeur $D$ associée aux pixels de la sous-partie ($\Omega_i$) est sensiblement continue sur la sous-partie ($\Omega_i$).

10. Procédé selon la revendication 9, dans lequel l'étape (b) comprend pour chaque sous-partie ($\Omega_i$) une estimation par différences finies de la discontinuité de D le long du contour ($\partial\Omega_i$) de la sous-partie ($\Omega_i$).

11. Système pour l'estimation du mouvement d'un objet (3) évoluant dans un environnement ($\Sigma$), le système comprenant des moyens d'acquisition optique (2) et un équipement (1) comprenant des moyens de traitement de données (11) configurés pour mettre en oeuvre le procédé selon l'une des revendications 1 à 10.

12. Produit programme d'ordinateur comprenant des instructions de code pour l'exécution d'un procédé d'estimation du mouvement d'un objet (3) évoluant dans un environnement ($\Sigma$) selon l'une des revendications 1 à 10.

13. Moyen de stockage lisible par un équipement informatique sur lequel un produit programme d'ordinateur comprend des instructions de code pour l'exécution d'un procédé d'estimation du mouvement d'un objet (3) évoluant dans un environnement ($\Sigma$) selon l'une des revendications 1 à 10.

**Patentansprüche**

1. Verfahren zum Schätzen der Bewegung eines Objekts (3), das sich in einer Umgebung ($\Sigma$) fortbewegt, wobei das Verfahren **dadurch gekennzeichnet ist, dass** es Schritte umfasst des:

(a) Erfassens, durch fest mit dem Objekt (3) verbundene optische Erfassungsmittel (2), von mindestens zwei aufeinanderfolgenden Tiefenbildern der Umgebung ($\Sigma$);
(b) Auswählens, durch Datenverarbeitungsmittel (11) einer Ausrüstung (1), von mindestens einem Teilabschnitt ($\Omega_i$) der zwei Tiefenbilder;
(c) Berechnens, für jeden ausgewählten Teilabschnitt ($\Omega_i$) der zwei Tiefenbilder durch die Datenverarbeitungsmittel (11) in Abhängigkeit von den Tiefenwerten der Pixel im Teilabschnitt ($\Omega_i$):

∘ eines ersten Parameters ($\gamma_i$), der eine Differenz eines Volumens, das einem durch eine Kontur ($\partial\Omega_i$) des Teilabschnitts ($\Omega_i$) definierten Raumwinkel zugeordnet ist, zwischen den zwei Tiefenbildern wiedergibt;
∘ eines zweiten Parameters ($\alpha_i$), der durch die Formel $\oint_{\partial\Omega_i}(D^3\eta \times n)dl_\eta$ gegeben ist, die auf mindestens eines der zwei Tiefenbilder angewendet wird;

○ eines dritten Parameters (β<sub>i</sub>), der durch die Formel $\frac{3}{2}\oint_{\partial\Omega_i}(D^2 n)dl_\eta$ gegeben ist, die auf mindestens eines der zwei Tiefenbilder angewendet wird,

wobei für ein Pixel der Kontur ($\partial\Omega_i$) eines Teilabschnitts ($\Omega_i$) eines Tiefenbildes $D$ die dem Pixel zugeordnete Tiefe ist, $\eta$ der Einheitsvektor ist, der die dem Pixel zugeordnete Beobachtungsrichtung wiedergibt, $n$ der Einheitsvektor senkrecht zur Kontur ($\partial\Omega_i$) an dem Pixel ist, und $dl_\eta$ ein Element von Elementarlänge der Kontur ($\partial\Omega_i$) des Teilabschnitts ($\Omega_i$) ist;

(d) Schätzens, durch die Datenverarbeitungsmittel (11), von mindestens einer Komponente der Bewegung des Objekts (3) in Abhängigkeit von dem ersten, zweiten und dritten Parameter ($\alpha_i$, $\beta_i$, $\gamma_i$), die jedem Teilabschnitt ($\Omega_i$) zugeordnet sind.

2. Verfahren zum Schätzen der Bewegung eines Objekts (3), das sich in einer Umgebung ($\Sigma$) fortbewegt, wobei das Verfahren **dadurch gekennzeichnet ist, dass** es Schritte umfasst des:

(a) Erfassens, durch fest mit der Umgebung ($\Sigma$) verbundene optische Erfassungsmittel (2), von mindestens zwei aufeinanderfolgenden Tiefenbildern des Objekts (3);

(b) Auswählens, durch Datenverarbeitungsmittel (11) einer Ausrüstung (1), von mindestens einem Teilabschnitt ($\Omega_i$) der zwei Tiefenbilder, wobei jeder Teilabschnitt von zwei Bildern ausschließlich auf dem Objekt (3) liegt,

(c) Berechnens, für jeden ausgewählten Teilabschnitt ($\Omega_i$) der zwei Tiefenbilder durch die Datenverarbeitungsmittel (11) in Abhängigkeit von den Tiefenwerten der Pixel im Teilabschnitt ($\Omega_i$):

○ eines ersten Parameters ($\gamma_i$), der eine Differenz eines Volumens, das einem durch eine Kontur ($\partial\Omega_i$) des Teilabschnitts ($\Omega_i$) definierten Raumwinkel zugeordnet ist, zwischen den zwei Tiefenbildern wiedergibt;

○ eines zweiten Parameters ($\alpha_i$), der durch die Formel $\oint_{\partial\Omega_i}(D^3\eta \times n)dl_\eta$ gegeben ist, die auf mindestens eines der zwei Tiefenbilder angewendet wird;

○ eines dritten Parameters ($\beta_i$), der durch die Formel $\frac{3}{2}\oint_{\partial\Omega_i}(D^2 n)dl_\eta$ gegeben ist, die auf mindestens eines der zwei Tiefenbilder angewendet wird,

wobei für ein Pixel der Kontur ($\partial\Omega_i$) eines Teilabschnitts ($\Omega_i$) eines Tiefenbildes $D$ die dem Pixel zugeordnete Tiefe ist, $\eta$ der Einheitsvektor ist, der die dem Pixel zugeordnete Beobachtungsrichtung wiedergibt, $n$ der Einheitsvektor senkrecht zur Kontur ($\partial\Omega_i$) an dem Pixel ist, und $dl_\eta$ ein Element von Elementarlänge der Kontur ($\partial\Omega_i$) des Teilabschnitts ($\Omega_i$) ist;

(d) Schätzens, durch die Datenverarbeitungsmittel (11), von mindestens einer Komponente der Bewegung des Objekts (3) in Abhängigkeit von dem ersten, zweiten und dritten Parameter ($\alpha_i$, $\beta_i$, $\gamma_i$), die jedem Teilabschnitt ($\Omega_i$) zugeordnet sind.

3. Verfahren nach einem der vorstehenden Ansprüche, wobei die mindestens eine geschätzte Komponente der Bewegung des Objekts (3) aus drei Komponenten einer linearen Geschwindigkeit (v) des Objekts (3), drei Komponenten einer Winkelgeschwindigkeit ($\omega$) des Objekts (3), und einer linearen Kombination einer Vielzahl der Komponenten einer linearen oder Winkelgeschwindigkeit (v, $\omega$) des Objekts (3) ausgewählt wird.

4. Verfahren nach Anspruch 3, wobei im Schritt (b) mindestens sechs unabhängige Teilabschnitte ($\Omega_i$) der zwei Tiefenbilder ausgewählt werden, wobei der Schritt (d) das Schätzen der drei Komponenten einer linearen Geschwindigkeit (v) des Objekts (3) und der drei Komponenten einer Winkelgeschwindigkeit ($\omega$) des Objekts (3) umfasst.

5. Verfahren nach einem der Ansprüche 3 und 4, wobei der Schritt (d) einen vorhergehenden Schritt (d0) umfasst des Bildens, durch die Datenverarbeitungsmittel (11), einer Matrix $A$, die $N$ Spalten und eine Zeile für jeden Teilabschnitt ($\Omega_{i,1\leq i\leq N}$) umfasst, und eines Vektors $B$, der eine Zeile für jeden Teilabschnitt ($\Omega_{i,1\leq i\leq N}$) umfasst, sodass $A=(\alpha_i^T, \beta_i^T)_{1\leq i\leq N}$ und $B=(\gamma_i)_{1\leq i\leq N}$, wobei der Schritt (d) das Bestimmen eines Vektors $X=(\omega^T, v^T)^T$ umfasst, sodass $AX=B$.

6. Verfahren nach einem der vorstehenden Ansprüche, wobei der erste Parameter ($\gamma_i$) durch die Differenz der auf jedes der Tiefenbilder angewendeten Formeln $\int_{\Omega_i}D^3 d\sigma_\eta$ gegeben ist, wobei für ein Pixel eines Teilabschnitts ($\Omega_i$) eines Tiefenbildes $D$ die dem Pixel zugeordnete Tiefe ist, und $d\sigma_\eta$ ein elementares Oberflächenelement des Teil-

abschnitts ($\Omega_i$) ist.

7. Verfahren nach einem der vorstehenden Ansprüche, wobei jeder im Schritt (b) ausgewählte Teilabschnitt ($\Omega_i$) rechteckig ist.

8. Verfahren nach einem der vorstehenden Ansprüche, wobei alle die im Schritt (b) ausgewählten Teilabschnitt ($\Omega_i$) verschieden ist.

9. Verfahren nach einem der vorstehenden Ansprüche, wobei jeder Teilabschnitt ($\Omega_i$) im Schritt (b) derart ausgewählt wird, dass die den Pixeln des Teilabschnitts ($\Omega_i$) zugeordnete Tiefe $D$ im Wesentlichen über den Teilabschnitt ($\Omega_i$) kontinuierlich ist.

10. Verfahren nach Anspruch 9, wobei der Schritt (b) für jeden Teilabschnitt ($\Omega_i$) eine Schätzung durch finite Differenzen der Diskontinuität von $D$ entlang der Kontur ($\partial\Omega_i$) des Teilabschnitts ($\Omega_i$) umfasst.

11. System zum Schätzen der Bewegung eines Objekts (3), das sich in einer Umgebung ($\Sigma$) fortbewegt, wobei das System optische Erfassungsmittel (2) und eine Ausrüstung (1) umfasst, die Datenverarbeitungsmittel (11) umfasst, die dafür konfiguriert sind, das Verfahren nach einem der Ansprüche 1 bis 10 umzusetzen.

12. Computerprogrammprodukt, das Codeanweisungen zum Ausführen eines Verfahrens zum Schätzen der Bewegung eines sich in einer Umgebung ($\Sigma$) fortbewegenden Objekts (3) nach einem der Ansprüche 1 bis 10 umfasst.

13. Von einer Informatikausrüstung lesbares Speichermittel, auf dem ein Computerprogrammprodukt Codeanweisungen zum Ausführen eines Verfahrens zum Schätzen der Bewegung eines sich in einer Umgebung ($\Sigma$) fortbewegenden Objekts (3) nach einem der Ansprüche 1 bis 10 umfasst.

**Claims**

1. Method for estimating the movement of an object (3) moving about an environment ($\Sigma$), the method being **characterised in that** it includes the steps of:

(a) acquiring, by optical acquisition means (2) secured to the object (3), at least two consecutive depth images of the environment ($\Sigma$);
(b) selecting, by data-processing means (11) of a device (1), at least one sub-portion ($\Omega_i$) of the two depth images,
(c) for each selected sub-portion ($\Omega_i$) of the two depth images, calculating by the data-processing means (11) on the basis of the depth values of the pixels in the sub-portion ($\Omega_i$):

◦ a first parameter ($\gamma_i$) representing a difference between the two depth images of a volume associated with a solid angle defined by a contour ($\partial\Omega_i$) of the sub-portion ($\Omega_i$);
◦ a second parameter ($\alpha_i$) given by the formula $\oint_{\partial\Omega_i}(D^3\eta \times n)dl_\eta$ applied to at least one of the two depth images;

◦ a third parameter ($\beta_i$) given by the formula $\frac{3}{2}\oint_{\partial\Omega_i}(D^2n)dl_\eta$ applied to at least one of the two depth images,

where for a pixel of the contour ($\partial\Omega_i$) of a sub-portion ($\Omega_i$) of a depth image, $D$ is the depth associated with the pixel, $\eta$ is the unit vector representing the direction of observation associated with the pixel, $n$ is the unit vector normal to the contour ($\partial\Omega_i$) in said pixel, and $dl_\eta$ is a basic length element of the contour ($\partial\Omega_i$) of the sub-portion ($\Omega_i$);
(d) estimating, by the data-processing means (11), at least one component of the movement of said object (3) on the basis of the first, second and third parameters ($\alpha_i$, $\beta_i$, $\gamma_i$) associated with each sub-portion ($\Omega_i$).

2. Method for estimating the movement of an object (3) moving about an environment ($\Sigma$), the method being **characterised in that** it includes the steps of:

(a) acquiring, by optical acquisition means (2) secured to the environment ($\Sigma$), at least two consecutive depth images of the object (3);

(b) selecting, by data-processing means (11) of a device (1), at least one sub-portion ($\Omega_i$) of the two depth images, each sub-portion of two images being situated only on the object (3),

(c) for each selected sub-portion ($\Omega_i$) of the two depth images, calculating by the data-processing means (11) on the basis of the depth values of the pixels in the sub-portion ($\Omega_i$):

    ◦ a first parameter ($\gamma_i$) representing a difference between the two depth images of a volume associated with a solid angle defined by a contour ($\partial\Omega_i$) of the sub-portion ($\Omega_i$);

    ◦ a second parameter ($\alpha_i$) given by the formula $\oint_{\partial\Omega i}(D^3\eta \times n)dl_\eta$ applied to at least one of the two depth images;

    ◦ a third parameter ($\beta_i$) given by the formula $\frac{3}{2}\oint_{\partial\Omega_i}(D^2 n)dl_\eta$ applied to at least one of the two depth images,

where for a pixel of the contour ($\partial\Omega_i$) of a sub-portion ($\Omega_i$) of a depth image, $D$ is the depth associated with the pixel, $\eta$ is the unit vector representing the direction of observation associated with the pixel, $n$ is the unit vector normal to the contour ($\partial\Omega_i$) in said pixel, and $dl_\eta$ is a basic length element of the contour ($\partial\Omega_i$) of the sub-portion ($\Omega_i$);

(d) estimating, by the data-processing means (11), at least one component of the movement of said object (3) on the basis of the first, second and third parameters ($\alpha_i$, $\beta_i$, $\gamma_i$) associated with each sub-portion ($\Omega i$).

3.    Method according to one of the previous claims, wherein the at least one estimated component of the movement of said object (3) is selected from a group comprising: three components of a linear speed (v) of the object (3), three components of an angular speed ($\omega$) of the object (3), and a linear combination of a plurality of said components of a linear or angular speed (v, $\omega$) of the object (3).

4.    Method according to claim 3, wherein at least six sub-portions ($\Omega_i$) independent from the two depth images are selected in step (b), whereby step (d) comprises the estimation of the three components of a linear speed (v) of the object (3) and of the three components of an angular speed ($\omega$) of the object (3).

5.    Method according to either claim 3 or claim 4, wherein step (d) comprises a prior step (d0) of forming, by the data processing means (11), an array $A$ comprising $N$ columns and one row for each sub-portion ($\Omega_{i,1\leq i\leq N}$), and a vector $B$ comprising one row for each sub-portion ($\Omega_{i,1\leq i\leq N}$), such that $A=(\alpha_i^T, \beta_i^T)_{1\leq i\leq N}$ and $B=(\gamma_i)_{1\leq i\leq N}$, whereby step (d) comprises the determination of a vector $X=(\omega^T, v^T)^T$, such that $AX=B$.

6.    Method according to one of the previous claims, wherein the first parameter ($\gamma_i$) is given by the difference between the formulae $\int_{\Omega_i}D^3 d\sigma_\eta$ applied to each of the depth images where, for a pixel of a sub-portion ($\Omega_i$) of a depth image, $D$ is the depth associated with the pixel and $d\sigma_\eta$ is a basic surface element of the sub-portion ($\Omega_i$).

7.    Method according to one of the previous claims, wherein each sub-portion ($\Omega_i$) selected in step (b) is rectangular.

8.    Method according to one of the previous claims,

9.    Method according to one of the previous claims, wherein each sub-portion ($\Omega_i$) is selected in step (b) such that the depth $D$ associated with the pixels of the sub-portion ($\Omega_i$) is substantially continuous over the sub-portion ($\Omega_i$).

10.    Method according to claim 9, wherein step (b) comprises, for each sub-portion ($\Omega_i$), an estimation by finite difference of the discontinuity of $D$ along the contour ($\partial\Omega_i$) of the sub-portion ($\Omega_i$).

11.    System for estimating the movement of an object (3) moving about an environment ($\Sigma$), the system comprising optical acquisition means (2) and a device (1) comprising data processing means (11) configured to implement the method according to one of claims 1 to 10.

12.    Computer program product comprising code instructions for executing a method for estimating the movement of an object (3) moving about an environment ($\Sigma$) according to one of claims 1 to 10.

13.    Storage means capable of being read by a computer device on which a computer program product comprises code instructions for executing a method for estimating the movement of an object (3) moving about an environment (Σ) according to one of claims 1 to 10.

**FIG. 1**

**FIG. 2a**

FIG. 2b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Moving object detection by mobile Stereo Omni-directional System (SOS) using spherical depth image. **SANAE SHIMIZU et al.** PATTERN ANALYSIS AND APPLICATIONS. SPRINGER-VERLAG, 08 Novembre 2005, vol. 9, 113-126

- **S. BONNABEL ; P. ROUCHON.** Fusion of inertial and visual : a geometrical observer-based approach. *2nd Mediterranean Conference on Intelligent Systems and Automation (CISA'09),* 2009, vol. 1107, 54-58